# EUROPEAN PATENT SPECIFICATION

(11) **EP 3 969 953 B1**
(45) Date of publication and mention of the grant of the patent: **19.06.2024**
(21) Application number: 19739533.8
(22) Date of filing: 01.07.2019
(51) Int. Cl.: G02B 7/04, G02B 27/64, G02B 3/14, G02B 13/00

(54) **OPTICAL DEVICE WITH A SHAPE MEMORY ALLOY BASED ACTUATOR FOR A TUNABLE LENS**
OPTISCHE VORRICHTUNG MIT EINEM AKTUATOR AUF BASIS EINER FORMGEDÄCHTNISLEGIERUNG FÜR EINE ABSTIMMBARE LINSE
DISPOSITIF OPTIQUE AVEC ACTIONNEUR EN ALLIAGE À MÉMOIRE DE FORME POUR LENTILLE ACCORDABLE

(43) Date of publication of application: 23.03.2022
(73) Proprietor: Huawei Technologies Co., Ltd., Longgang District Shenzhen, Guangdong 518129 (CN); Actuator Solutions GmbH, 91710 Gunzenhausen (DE)
(72) Inventor: EROMÄKI, Marko, 33820 Tampere (FI); TUULOS, Eero, 33430 Vuorentausta (FI); JUHOLA, Mikko, 25130 Muurla (FI); QIAN, Kang, 33210 Tampere (FI); KÖPFER, Markus, 73495 Regelseweiler (DE); LU, Yi Yao, 91710 Gunzenhausen (DE)
(74) Representative: Roth, Sebastian
(86) International application number: PCT/EP2019/067545
(87) International publication number: WO 2021/001008

(56) References cited:
- WO-A1-2019/110617
- US-A1- 2009 052 037

## Description

### TECHNICAL FIELD

The present invention relates to an optical device for an optical system of a light transmitting or light receiving device. The optical device is in particular suitable for a camera module, e.g. as it is used in a mobile device, like a smartphone. The optical device comprises a tunable lens, which is realized by an elastic lens, and the elastic lens shape can be controlled using one or more shape memory alloy (SMA) wires. The invention also presents an optical system that includes the optical device, and a method for operating the optical device, i.e. actuating the elastic element using the one or more SMA wires.

### BACKGROUND

Optical devices, like camera modules, e.g., installed in smartphones, are key differentiators within the mobile industry. As performance levels are steadily increasing, new features are needed. For instance, by introducing tunable lenses (e.g. elastic deformable lenses), new optical devices are able to perform or support focusing, image stabilization, or other optical operations, more efficiently. However, these optical devices need a suitable tunable lens, and a suitable electromechanical actuator, in order to tune the lens.

The most popular technology for realizing an actuator for moving a lens barrel perpendicular to an image sensor is a voice coil motor (VCM) actuator. Another popular technology is a piezo-electric motor actuator. In addition, actuators for realizing optical image stabilization by tilting a complete lens barrel have been considered.

However, all of these actuators typically generate a too small force, in particular when it is desired to deform an elastic tunable lens in an optical device. For example, shape changing materials of such an elastic lens (e.g. liquids and polymers) require considerable physical deformation, and thus require larger forces. Disadvantageously, as an example, a VCM actuator is barely able to generate 50 mN of operating forces within a reasonable space and with a reasonable power consumption. This force is not sufficient for the above-mentioned application scenario of deforming an elastic lens, in order to perform a focusing and/or optical image stabilization operation in an optical device.

WO 2019/110617 A1 discloses an optical zoom device with focus tunable lens cores.

### SUMMARY

In view of the above-mentioned challenges and disadvantages, embodiments of the invention aim to provide an improved optical device, for example, an optical device that can be used in a camera module of a mobile device. An objective is in particular to provide an optical device including a tunable (elastic) lens, which can be controlled very precisely and with a sufficiently high force. The optical device should enable high speed focusing and/or image stabilization operations by actuating the elastic lens. Furthermore, the power consumption of the optical device should be low, the optical device should be compact, and should have reasonable production costs.

The objective is achieved by embodiments of the invention as described in the enclosed independent claims. Advantageous implementations of the embodiments of the invention are further defined in the dependent claims. In the following, parts of the description and drawings referring to embodiments which are not covered by the claims are not presented as embodiments of the invention, but as examples useful for understanding the invention.

A first aspect of the invention provides an optical device, comprising: an elastic lens, a movable structure connected to the elastic lens, and one or more SMA wires coupled to the movable structure, wherein length changes of the one or more SMA wires cause a movement of the movable structure, and wherein the movement of the movable structure causes a deformation of the elastic lens.

The optical device of the first aspect may be located in a light receiving device (e.g. a photographic camera) or in a light transmitting device (e.g. an optical transmitter). The optical device may be suitable for such a light receiving device or light transmitting device installed in a mobile device, e.g. a smartphone or tablet. The elastic lens is a tunable lens, and its lens properties can be tuned by deforming at least one surface of the lens.

The optical device of the first aspect has accordingly a SMA based actuator for the elastic lens, which improves it over conventional optical devices. In particular, the optical device can be built very compact and with low production costs, so that it can be used in e.g. a camera module of a mobile device. The elastic lens of the optical device can be tuned very precisely and with a sufficiently high force, so that it can be used for performing a focusing and/or image stabilization operation. Moreover, the optical device allows fast operation, i.e. a fast deformation of the elastic lens, in order to perform high speed focusing, and very precise optical image stabilization. Furthermore, the power consumption of the optical device is low, since only the one or more SMA wires have to be actuated to tune the elastic lens.

In an implementation of the first aspect, the optical device is configured to perform a focusing operation and/or an image stabilization operation by deforming the elastic lens.

Further, the optical device is compact and has low power consumption. Thus, the optical device is well suited for being installed in a camera module of, for instance, a mobile device, like a smartphone, tablet, laptop, hand-held camera, or the like.

In an implementation of the first aspect, the focusing operation causes a change of a surface curvature of the elastic lens.

In this way, the refractive index of the elastic lens is changed, i.e. the lens is tuned, and generally a light refraction operation can be carried out by tuning the elastic lens. This enables the optical device to perform focusing and/or image stabilization operations.

In an implementation of the first aspect, the optical device further comprises: a holding structure attached to the elastic lens, wherein the movable structure and the holding structure are attached to the elastic lens on opposite sides of the elastic lens.

The holding structure stabilizes the elastic lens, and ensures that the elastic lens can be deformed precisely and in a controlled manner.

In an implementation of the first aspect, the one or more SMA wires include one or more first sets of SMA wires, wherein the one or more first sets of SMA wires are configured to shift the movable structure along a first axis, thereby changing a surface curvature of the elastic lens.

A "set of SMA wires" in this disclosure may include one or more SMA wires. That is, one or more sets of SMA wires may include just one SMA wire. A "set of SMA wires" may be defined by one or more SMA wires that are operated together, e.g. with the same driving current or applied voltage. Multiple SMA wires in a "set of SMA wires" may all be of the same type (e.g. may have the same diameter, and/or length, and/or material properties etc.), so that they show the same or similar length contraction properties, in case a driving current or voltage is applied.

In an implementation of the first aspect, the optical device further comprises one or more elastic elements, configured to exert a force onto the movable structure along the first axis. In particular, the one or more elastic elements are configured to provide a return force along the first axis. The elastic element is thus antagonistic to the one or more SMA wires.

In an implementation of the first aspect, the optical device further comprises one or more sensors, configured to measure a position of the movable structure.

The one or more sensors may, in particular, be one or more Hall sensors, and enable the optical device to perform very accurate focusing and/or image stabilization operations.

In an implementation of the first aspect, the movable structure includes a base part and a tilting part, wherein the tilting part is coupled to the base part and is tiltable relative to the base part about a second axis and is connected to the elastic lens, and the one or more SMA wires include a plurality of second sets of SMA wires which are configured to tilt the tilting part about the second axis and thereby tilt the elastic lens about the second axis.

The base part has a movable part, and may be responsible for performing a focusing operation of the optical device. The tilting part may be responsible for performing an optical image stabilization operation of the optical device. However, the two parts may be coupled, and the two optical operations can thus be carried out at the same time. The base part and the tilting part, together with the one or more SMA wires, form the SMA based actuator of the optical device, i.e. for actuating/tuning the elastic lens. In particular, the second sets of SMA wires may be configured to tilt the elastic lens by an angle of between 2.5° - 4° about the second axis.

In an implementation of the first aspect, the tilting part comprises a first member, to which the second sets of SMA wires are attached, and a second member, which is coupled to the first member and is tiltable relative to the first member about a third axis and is connected to the elastic lens.

In an implementation of the first aspect, the one or more SMA wires include a plurality of third sets SMA wires connected to the second member and configured to tilt the second member about the third axis and thereby tilt the elastic lens about the third axis.

In particular, the third sets of SMA wires may be configured to tilt the elastic lens by an angle of between 2.5° - 4° about the third axis. The one or more third sets of SMA wires may comprise or be the one or more second sets of SMA wires.

In an implementation of the first aspect, the movable structure further includes a bearing configured to guide the tilting of the second member.

This allows a more precise and better controlled optical image stabilization operation of the optical device.

In an implementation of the first aspect, the base part and the tilting part are mechanically coupled. Thereby, a shifting movement initiated by the base part may be followed by the tilting part, while a tilting movement initiated by the tilting part may not be followed by the base part.

In an implementation of the first aspect, the base part and the tilting part are configured to move, selectively, either independently or simultaneously.

That means, the two parts of the movable structure can be moved independently from each other, sequentially, or simultaneously.

In an implementation of the first aspect, the optical device further comprises: a lens barrel, wherein the elastic lens is arranged at one end of the lens barrel, and wherein the movable structure is arranged around the lens barrel.

The lens barrel may include one or more other lenses (i.e. other than the elastic lens), e.g. one or more movable and/or stationary lenses, or even other optical elements, like filters. The one or more other lenses and/or optical elements provided in the lens barrel may work together with the elastic lens, in order to perform a focusing and/or optical image stabilization operation of the optical device.

A second aspect of the invention provides an optical system, comprising: an image sensor, and an optical device according to the first aspect or any of its implementation forms, arranged to generate an image on the image sensor, wherein the optical device is configured to perform a focusing operation and/or an image stabilization operation by moving the movable structure.

A focusing operation may be an operation that comprises (or aims at) focusing an image on the image sensor. An image stabilization operation may be an operation that comprises (or aims at) eliminating blur of the image on the image sensor, particularly blur caused by lens shake. The optical system of the second aspect enjoys all the advantages and effects described above for the optical device of the first aspect.

A third aspect of the invention provides a method for performing a focusing operation and/or image stabilization operation, the method comprising: actuating one or more SMA wires to change their lengths, wherein the SMA wire are coupled to a movable structure, and the movable structure is connected to an elastic lens, wherein the length changes of the SMA wires cause a movement of the movable structure, and wherein the movement of the movable structure deforms the elastic lens.

The method may be carried out by operating the optical device of the first aspect or its implementation forms, particularly by actuating the one or more SMA wires. The method may also be carried out by operating the optical device of the optical system of the second aspect or its implementation forms. The method achieves the same advantages and effects as described above.

In summary, embodiments of the invention describe an electromechanical actuation arrangement for an optical device or system, e.g. inside mobile camera, which contains a (deformation based) tunable lens. The embodiments of the invention may utilize three stacked and relatively moving parts (i.e. the movable part of the base part, and the two members of the tilting part). These parts may be suspended by the one or more SMA wires, in particular different sets of SMA wires.

The base part (bottom part, i.e. closest to an image sensor) may be used to perform a z-axis movement (i.e. a shift in a direction perpendicular to an image sensor plane, which respectively increases or decreases a distance between the base part and the image sensor) to perform a focusing operation. The operation may use a self-measuring capability, e.g. realized by one or more Hall sensors. The two members of the tilting part may be used to perform tilting movements along the x- and y-axis (wherein x-, y-, and z-axis are perpendicular and form a coordinate system).

The movable parts may have couplings to the elastic lens, the optical surface of which is deformed by the resulting movements and a change in the refractive index generated. Suitable suspensions and compact coupling structures may be provided between the parts of the optical device, noting operation, assembly and reliability aspects.

The optical device enables high force generation, good driving accuracy and fast speeds for creating the deformations on the elastic lens. Also electromagnetic immunity, e.g. when the system is combined into a multi-camera system, is highly beneficial, since interference between adjacent magnetic fields can be avoided.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: shows an optical device.

- FIG. 2: shows an optical device according to an embodiment of the invention.
- FIG. 3: shows schematically an optical device according to an embodiment of the invention, which is arranged above an image sensor.
- FIG. 4: shows an optical system according to an embodiment of the invention.
- FIG. 5: shows a holding structure and a part of a movable structure of an optical device according to an embodiment of the invention.
- FIG. 6: shows movement of a movable structure of an optical device according to an embodiment of the invention, for performing a focusing operation.
- FIG. 7: shows a base part of a movable structure of an optical device according to an embodiment of the invention.
- FIG. 8: shows movement of a movable structure of an optical device according to an embodiment of the invention, for performing an optical image stabilization operation.
- FIG. 9: shows a tilting part of a movable structure of an optical device according to an embodiment of the invention
- FIG. 10: shows a tilting part of a movable structure of an optical device according to an embodiment of the invention

### DETAILED DESCRIPTION OF EMBODIMENTS

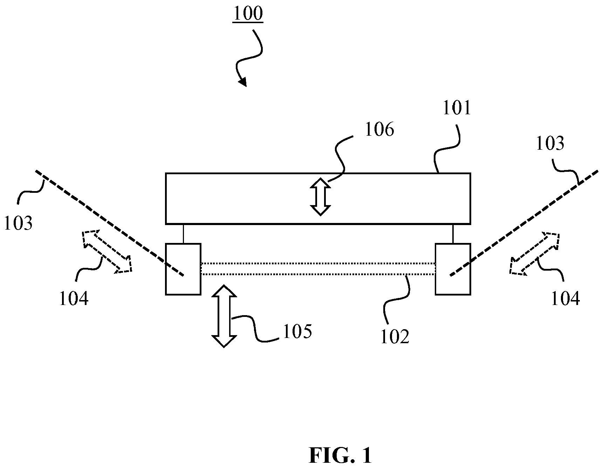

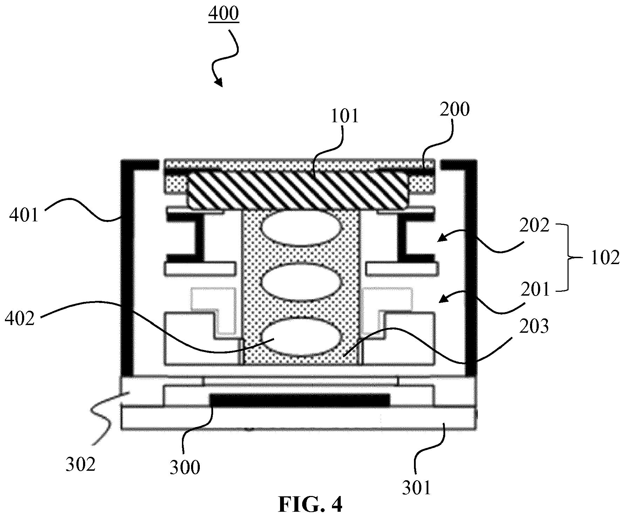

FIG. 1 shows an optical device 100. The optical device 100 is suitable for use in an optical system 400 (see FIG. 4), e.g. for a light transmitting device, or a light receiving device (e.g. a camera module). In particular, the optical device 100 may be used in a camera module of a mobile device, like a smartphone, tablet, laptop, or the like.

The optical device 100 comprises an elastic lens 101, a movable structure 102 connected to the elastic lens 101, and one or more SMA wires 103 coupled to the movable structure 102.

The one or more SMA wires 103 are operable to change their lengths 104, i.e. each SMA wire 103 can be operated to change its length 104, e.g. by a driving current or voltage. Thereby, each of the one or more SMA wires 103 may be operated/actuated independently or simultaneously from/with at least one other SMA wire 103 changing its length 104. One or more SMA wires 103 may also be grouped into one or more sets of SMA wires 103, which sets of SMA wires 103 may be operated by the same driving current or voltage. The length change(s) 104 of the one or more SMA wire 103 may all be of the same or of different amount. The length change(s) 104 of the one or more SMA wires 103 cause a movement 105 of the movable structure 102. Different SMA wires 103 or sets of SMA wires 103 may be coupled to different parts of the movable structure 102, and may respectively cause movement 105 of only that part of the movable structure 102. For example, one set of SMA wires 103 may cause a shifting movement of one or more parts of the movable structure 102, while another set of SMA wires causes a tilting movement of one or more parts of the movable structure 102, when it is actuated.

Any movement 105 of the movable structure 102, or one or more parts of the movable structure 102, causes a certain deformation 106 of the elastic lens 101. The deformation 106 of the elastic lens 101 may be used to perform a focusing operation and/or an optical image stabilization operation.

It is known that SMAs (and thus the one or more SMA wires 103) are characterized by a structural transition between two phases, namely the so-called Martensite phase which is stable at a lower temperature, and the so-called Austenite phase, which is stable at a higher temperature. A SMA is characterized by four temperatures, Mf, Ms, As, Af. Mf is the temperature below which the SMA is completely in the Martensite phase, i.e. it has a martensitic structure, while Af is the temperature above which the SMA is fully in the Austenite phase, i.e. it has an austenitic structure. Wires made of a SMA, also known as SMA wires, can be trained to change their shape when temperature changes from below Mf to above Af, and vice-versa. Processing and training of SMA wires are widely known procedures in the field, as exemplified by the paper "Shape Memory Alloy Shape Training Tutorial" dating back to the Fall 2004 training section "ME559 - Smart Materials and Structures".

It is also known that wires made of a SMA (e.g. the one or more SMA wires 103) start to shorten at a temperature equal to or higher than the Austenite start temperature As and reach their final length when heated at a temperature equal or above the Austenite final temperature Af.

Compared to a conventional optical device, in which typically a complete optical (lens) stack is moved up/down (z-direction) for performing a focusing operation, and/or the complete lens barrel is moved (in the x-y plane) for performing an optical image stabilization operation (either driven e.g. by a VCM actuator), the optical device 100 is based on the tunable elastic lens 101, which can be actuated by means of the movable structure 102 and the one or more SMA wires 103. The movable structure 102 and the one or more SMA wires 103 thus form an actuator for the elastic lens 101, suitable for performing, independently or simultaneously, a focusing and/or optical image stabilization operation.

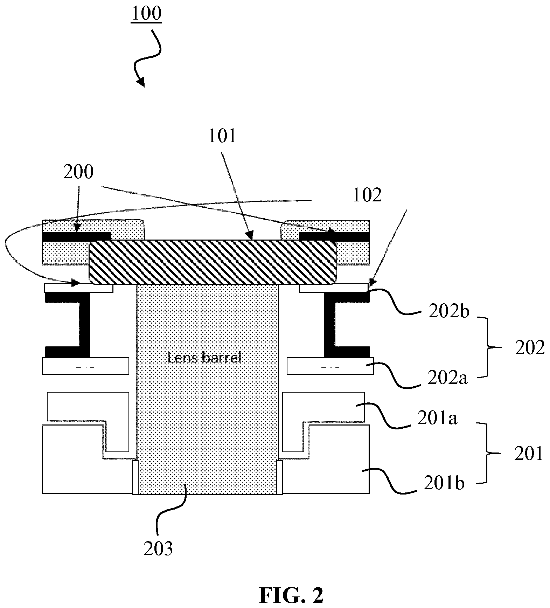

FIG. 2 shows an optical device 100 according to an embodiment of the invention, which embodiment builds on the device shown in FIG. 1. That means, FIG. 2 shows more optional details of the optical device 100 of FIG .1.

In particular, the elastic lens 101 of the optical device 100 may be located on top of a, preferably non-movable, lens barrel 203. The elastic lens 101 may further be connected to a holding structure 200. The holding structure 200 may be, or may be attached to, a fixed structure like a casing of the optical device 100. The holding structure 200 may also be part of the elastic lens 101, in which case the elastic lens 101 may be connected to the casing by means of the holding structure 200. The holding structure 200 may be attached to the elastic lens 101 on an opposite side than the movable structure 102 used to realize the focusing and/or image stabilization operation. The elastic lens 101 may have the shape of a disc, or another flat element, having two opposite surfaces. FIG. 2 shows the elastic lens 101 in an un-deformed state, i.e. with two flat and parallel opposite surfaces, to which holding structure 200 and movable structure 102 are respectively attached. However, the elastic lens 101 can of course deform by moving the movable structure 102, which particularly changes the surface curvature of at least one of the surfaces of the elastic lens 101.

The movable structure 102 may include a base part 201 and a tilting part 202. The tilting part 202 is coupled to the base part 201, and is connected to the elastic lens 101. The tilting part 202 may comprise a first member 202a (lower part) and a second member 202b (upper part), which are coupled to another, and wherein the second member 202b is connected to the elastic lens 101. The tilting part 202 is tiltable relative to the base part 201. The base part 201 is movable relative to the elastic lens 101, in particular may have a movable part 201 that is movable in this way, and may comprise an immovable part 201b to provide a hard stop for the movable part 201a.

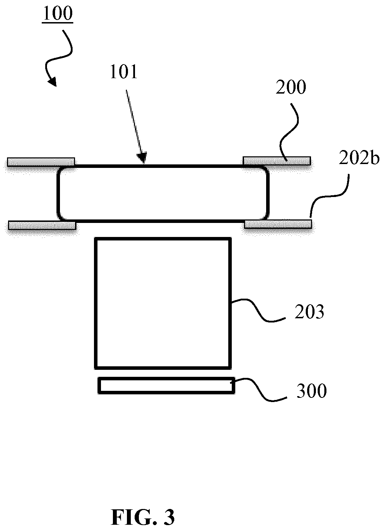

FIG. 3 shows schematically the optical device 100 of FIG. 2, which is arranged over an image sensor 300. The image sensor 300 may belong to an optical system 400 (see FIG. 4), which includes the optical device 100, but may in an embodiment also belong to the optical device 100.

FIG. 3 also illustrates how the holding structure 200 and the second member 202b of the tilting part 202 of the movable structure 102 may be arranged on opposite sides of the elastic lens 101, and how the elastic lens 101 may be arranged above the lens barrel 203. The lens barrel 203 and the elastic lens 101 may be arranged above the image sensor 300. The optical device 100 may be arranged with respect to the image sensor 300, so that it is able to generate an image on the image sensor 300. In particular, the optical device 100 may be arranged and configured, so that it is able perform a focusing operation and/or an optical image stabilization operation of an image on the image sensor 300, particularly by moving/controlling the movable structure 102 via driving the SMA wires 103 (not shown).

FIG. 4 shows an optical system 400 according to an embodiment of the invention, which includes the optical device 100 and the image sensor 300 shown in FIG. 3. The optical device 100 is arranged in the optical system 400 so that it is able to generate an image on the image sensor 300.

The optical system 400 may further include a casing 401, which protects the optical device 100 and the image sensor 300, respectively. Further, the optical system 400 may include an image sensor board 301, on which the image sensor 300 is arranged and supported. Optionally, a sensor cover 302 may be arranged between the image sensor 300 and the optical device 100. The sensor cover 302 may comprise a filter, e.g. an infra-red filter or Fabry-Perot filter. The optical device 100 may specifically be designed as illustrated in FIG. 2, i.e. it may include the holding structure 200, the elastic lens 101, and the movable structure 102 with the base part 201 and the tilting part 202. In addition, the lens barrel 203 of the optical device 100 may comprise a plurality of lenses 402, particularly one or more movable and/or stationary lenses. The lens barrel 203 may also include other optical elements, like filters.

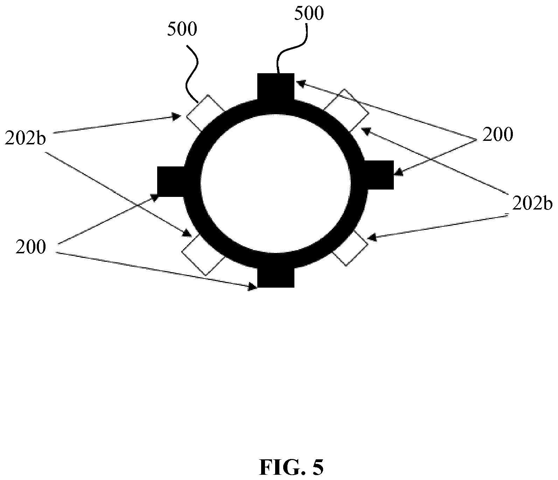

FIG. 5 shows an example of a holding structure 200 (black) and of the second member 202b (white) of the tilting part 202 of the movable structure 102. Notably, the elastic lens 101 may, in an embodiment, also include the holding structure 200 and/or the second member 202b, or may be formed with either of these pieces in an integral manner. In particular, both the holding structure 200 and the second member 202b can have a shape that follows the outlines of the shape of the elastic lens 101, e.g. they can have a ring-like shape (in a top view) in case of a disc-like elastic lens 101. Furthermore, both the holding structure 200 and the second member 202b can include a plurality of arms 500, e.g. four arms 500 each, arranged circumferentially around their ring-like structure, particularly at regular intervals of 90°. The arms 500 of the holding structure 200 can be used to attach it to a fixed structure, e.g. casing 401. The arms 500 of the second member 202b can be used to attach the tilting part 202 to the elastic lens 101, such that the elastic lens 101 can be tilted by the tilting of the tilting part 202 in multiple directions (e.g. x-y plane). In particular, by a movement of one or more of the arms 500 of the second member 202b, the shape of the elastic lens 101 can thus be modified, particularly by deformation 106. The resulting (deformed) shape of the elastic lens 101 may optically realize the focusing and/or optical image stabilization operation. The movable structure 102 is thus preferably designed to have two separate movable parts (the base part 201 (movable part 201a thereof), and the tilting part 202, respectively), which can work independently or simultaneously to carry out respectively these operations.

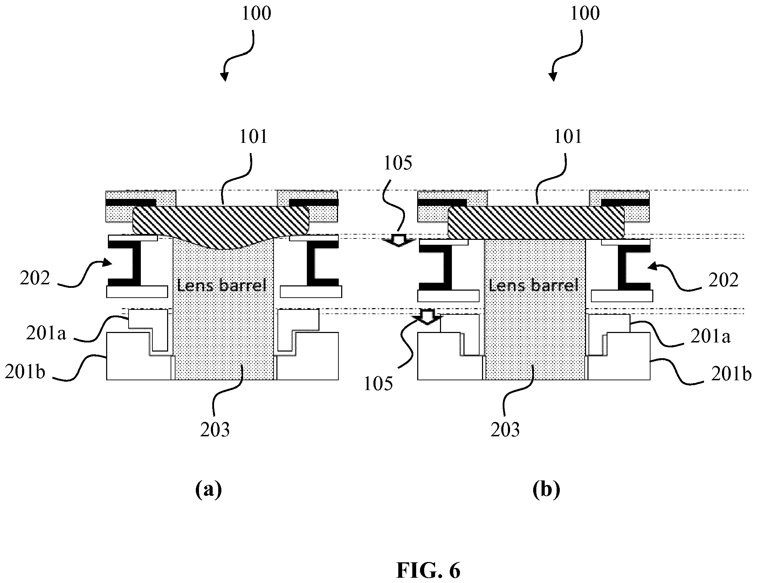

FIG. 6 shows movement of the movable structure 102 of the optical device 100 according to an embodiment of the invention, in particular a movement/shift of the base part 201, for performing a focusing operation.

The base part 201 of the movable structure 102, which may be used to drive the focusing operation, is arranged above the image sensor 300. One or more sets of SMA wires 103 may be coupled to the base part 201, in order to move its movable part 201a. In particular, the movable part 201a can be driven to shift - together with the tilting part 202 coupled to it - perpendicular to the image sensor 300 (e.g. z-direction). The movable part 201a may thereby be moved relative to an immovable part 201b of the base part 201. The immovable part 201b of the base part 201 may provide a hard stop for the movable part 201a.

In the power off state (see FIG. 6(a)) the base part 201 may be in its maximal z-position (i.e. distance from the image sensor 300), so that the movable pieces of the movable structure 102 all have a smallest possible distance to the holding structure 200. In this position, the elastic element 101 may be in a deformed state.

When a focus operation is active, i.e. in the power on state (see FIG. 6(b), an image signal processor (ISP) may drive the base part 201 into a determined position, with the aim to capture the best possible (sharpest) image on an image sensor 300. In particular, the ISP may actuate one or more SMA wires 103. When driving current through one or more SMA wires 103, e.g. belonging to a first set of SMA wires 103 connected to the base part 201, the movable part 201a of the base part 201 may move 105 parallel to the lens barrel 203, i.e. towards or away from the image sensor 300 (e.g. z-direction). This movement 105 may be directly linked to the tilting part 202, such that it follows this movement 105. The base part 201 may be designed such that the movement 105 forces, for instance, all arms 500 of the second member 202b (as shown in FIG. 5) attached to the elastic lens 101, in order to perform a simultaneous movement 105. All arms 500 may thereby have the same stroke. The maximum full stroke of the movable part 201a may be limited by the hard stop provided by the immovable part 201b, which is important to protect the base part 201 actuator against damages while drop test performed in device testing.

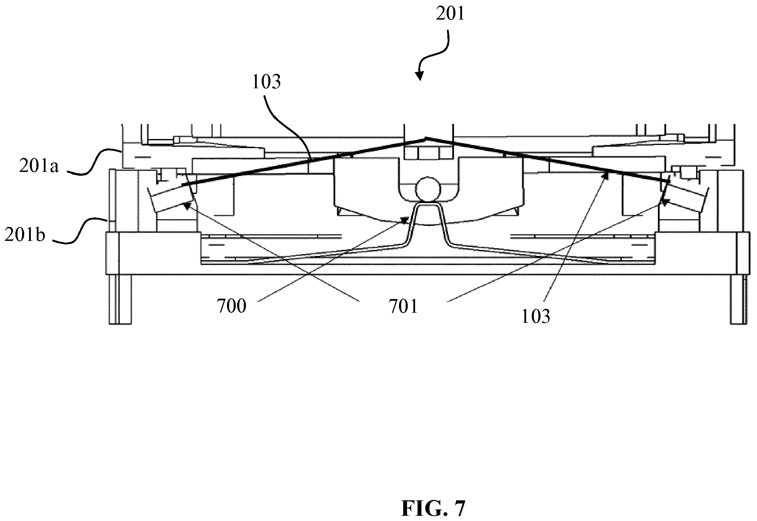

FIG. 7 shows an example implementation of the base part 201, as it may be used in the optical device 100 of FIG. 6. A force may be introduced to the movable part 201a of the base part 201, in order to keep a determined position in the power off state, e.g. by applying a spring load to the movable part 201a of the base part 201. This can be realized by a bias spring 700, e.g. realized by a leaf or spiral spring. One or more SMA wires 103 (e.g. the first set of SMA wires 103), which can for example contract by 1% - 4% of their original wire lengths via Joule heating through current supply, may be attached to the immovable part 201b of the base part 201, e.g. using a crimp connection 701, and may be attached to the movable part 201a of the base part 201. Thus, the contractions (lengths changes 104) of the one or more SMA wires 103 will force the movable part 201a towards the immovable part 201b. The force applied by the one or more SMA wires 103 may thereby work against the bias spring 700, which is configured to push the movable part 201a towards its maximum z-position (upwards in FIG. 7).

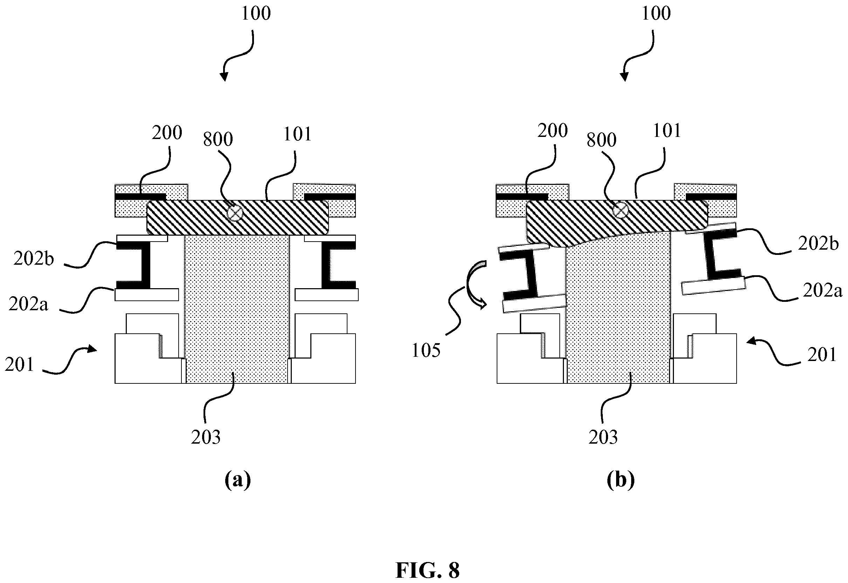

FIG. 8 shows movement of the movable structure 101 of the optical device 100 according to an embodiment of the invention, in particular a tilting of the tilting part 202, for performing an optical image stabilization operation.

The tilting part 202 of the movable structure 102 may include the first member 202a (lower part), to which one or more SMA wires 103 (e.g. a second set of SMA wires 103) are attached, and may further include the second member 202b, which is coupled to the first member 202a. The second set of SMA wires 103 may be configured, in an example implementation of the tilting part 202, to tilt the tilting part 202, i.e. the first and second members 202a and 202b together about an axis 800 (movement 105), and thereby tilt the elastic lens 101 about this axis 800. However, in another implementation, the second member 202b may also tilt relative to the first member 202a as described further below.

The tilting part 202 may in particular be designed that its first member 202a is mounted on top of the movable part 201a of the base part 201, and the second member 202b is attached to the elastic lens 101. In the power off state, the tilting part 202 and SMA wires 103 coupled thereto (optical image stabilization actuator) may not generate any force to the moving features. In the power on state, for instance, four SMA wires 103 may be used to operate the tilting part 202 in a swing mode around a defined pivot point. The total swing angle can be between 2.5° - 4°. The SMA wires 103 may therefore push and pull the two members 202a and 202b.

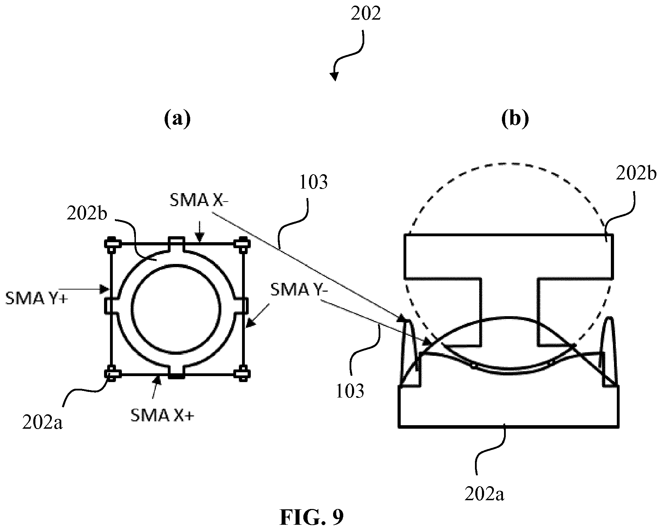

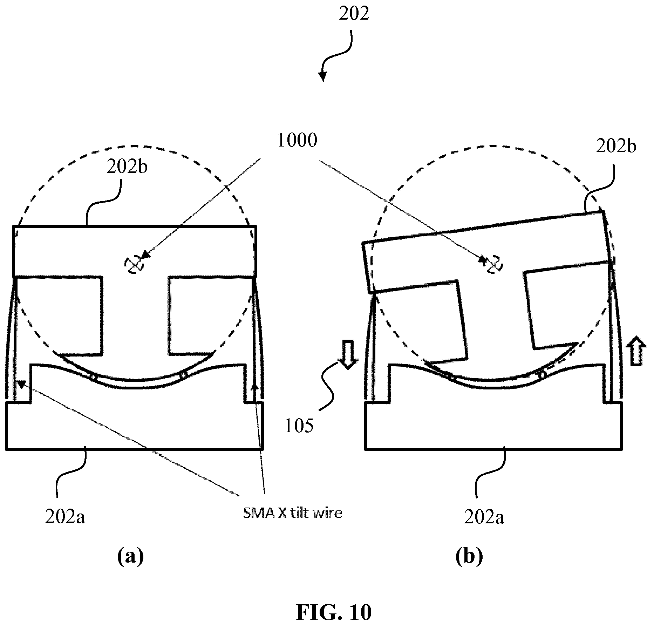

FIG. 9 and FIG. 10 show an example implementation of a tilting part 202. The second member 202b may be tiltable relative to the first member 202a. The second member 202b is connected to the elastic lens 101. In particular, one or more SMA wires 103 coupled to the tilting part 202 (e.g. a third set of SMA wires 103) may be configured to tilt the second member 202b about an axis 1000, and thereby tilt the elastic lens 101 about this axis 1000.

For instance, for x- and y-swing operations, two SMA wires 103 may be used as shown in FIG. 9. The second member 202b of the tilting part 202 may be designed such, that the swing is continuous given a structure that forces the movement to follow a given circle contour (see FIG. 10). A guidance of this movement 105 can be realized by ball bearing or slide bearing.

Stroke requirements for optical image stabilization and focus operations, when implemented by means of a tunable lens like the elastic lens 101, are 3-8 times higher than traditional requirements, where the forces are 3-10 times higher and where the dynamic is not as demanding as for traditional optics. Therefor the behavior of the one or more SMA wires 103 (high force/high stroke) offers the best package and force specification, and is beneficial to drive also a larger elastic lens 101. In addition, sensing the position of the movable structure 102, i.e. to determine its movement 105, allows omitting additional position sensors, in order to realize a smaller package, as nowadays requested for smartphones.

In summary, the embodiments of the invention provide some key benefits, which are listed below:
- The optical device 100 has an optimized electro-mechanical architecture that utilizes SMA wire technology for driving the elastic lens 101. This allows producing a focusing operation by applying a vertical movement (the linear movement of the movable part 201a of the base part 201), and an image stabilization operation by the tilt-movement of the tilting part 202.
- The movable structure 102 is at least a 3-layer actuation structure (movable part 201a, first member 202a, and second member 202b), which is able to separate the movements, thus resulting in an easily controllable system without mutual interference.
- The optical device 100 has an optimized mechanical arrangement between the key system parts: the actuating mechanism for the elastic lens 101 includes the one or more SMA wires 103 and provides a mounting base for static optics, wherein the static optics e.g. contain a housing (lens barrel 203). This further provides a mounting base for the elastic lens 101. The elastic lens 101 may contain a deforming part and a member to generate the deformation, i.e. for coupling to the actuation mechanism.
- The actuation mechanism in the optical device 100 can generate high forces of a few hundreds of mN, for generating large deformations for the elastic lens 101 and producing enhanced focusing and image stabilization operations.
- The optical device 100 can control the focusing operation accurately and with good sensitivity, which may be achieved by using Hall sensors to measure the movement.
- The optical device 100 can further produce a controlled tilt movement of the tilting part 202, e.g. along a curved track, wherein the pivot point can be arranged close to the optically deforming surface of the elastic lens 101, in order to minimize lateral stress.
- The actuating mechanism of the optical device 100 has electromagnetic immunity against adjacent magnetic fields, which may be produced by camera modules using VCM actuators. This may occur if the linear actuator 100 is used in a multi-camera module assembly.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. An optical device (100), comprising:
an elastic lens (101),
a movable structure (102) connected to the elastic lens (101), and shape-memory alloy, SMA, wires (103) coupled to the movable structure (102),
wherein length changes (104) of the SMA wires (103) cause a movement (105) of the movable structure (102), and
wherein the movement (105) of the movable structure (102) causes a deformation (106) of the elastic lens (101),
wherein the SMA wires (103) include one or more first sets of SMA wires (103), wherein the one or more first sets of SMA wires (103) are configured to shift the movable structure (102) along a first axis, thereby changing a surface curvature of the elastic lens (101),
wherein the movable structure (102) includes a base part (201) and a tilting part (202), wherein the tilting part (202) is coupled to the base part (201) and is tiltable relative to the base part (201) about a second axis (800) and is connected to the elastic lens (101),
the SMA wires (103) further include a plurality of second sets of SMA wires (103) which are configured to tilt the tilting part (202) about the second axis (800) and thereby tilt the elastic lens (101) about the second axis (800), and
wherein the one or more first sets of SMA wires (103) are connected to the base part (201).

2. The optical device (100) according to claim 1, configured to:
perform a focusing operation and/or an image stabilization operation by deforming (106) the elastic lens (101), wherein the base part (201) is responsible for the focusing operation and the tilting part (202) is responsible for the image stabilization operation.

3. The optical device (100) according to claim 2, wherein:
the focusing operation causes a change of a surface curvature of the elastic lens (101).

4. The optical device (100) according to one of the claims 1 to 3, further comprising:
a holding structure (200) attached to the elastic lens (101),
wherein the movable structure (102) and the holding structure (200) are attached to the elastic lens (101) on opposite sides of the elastic lens (101).

5. The optical device (100) according to one of the claims 1-4, further comprising:
one or more elastic elements (700), configured to exert a force onto the movable structure (102) along the first axis.

6. The optical device (100) according to one of the claims 1-5, further comprising:
one or more sensors, configured to measure a position of the movable structure (102).

7. The optical device (100) according to one of the claims 1-6, wherein the tilting part (202) comprises:
a first member (202a), to which the second sets of SMA wires (103) are attached, and
a second member (202b), which is coupled to the first member (202a) and is tiltable relative to the first member (202a) about a third axis (1000) and is connected to the elastic lens (101).

8. The optical device (100) according to claim 7, wherein:
the SMA wires (103) include a plurality of third sets of SMA wires (103) connected to the second member (202b) and configured to tilt the second member (202b) about the third axis (1000) and thereby tilt the elastic lens (101) about the third axis (1000).

9. The device (100) according to claim 7 or 8, wherein the movable structure (102) further includes:
a bearing configured to guide the tilting of the second member (202b).

10. The optical device (100) according to one of the claims 1 to 9, further comprising:
a lens barrel (203),
wherein the elastic lens (101) is arranged at one end of the lens barrel (203), and
wherein the movable structure (102) is arranged around the lens barrel (203).

11. An optical system (400), comprising:
an image sensor (300), and
an optical device (100) according to one of the claims 1 to 10, arranged to generate an image on the image sensor (300),
wherein the optical device (100) is configured to perform a focusing operation and/or an image stabilization operation by moving the movable structure (102).

12. Method for performing a focusing operation and/or image stabilization operation, the method comprising:
actuating SMA wires (103) to change (104) their lengths,
wherein the SMA wires (103) are coupled to a movable structure (102), and the movable structure (102) is connected to an elastic lens (101),
wherein the length changes (104) of the SMA wires (103) cause a movement (105) of the movable structure (102), and
wherein the movement (105) of the movable structure (102) deforms (106) the elastic lens (101),
wherein the SMA wires (103) include one or more first sets of SMA wires (103), wherein the one or more first sets of SMA wires (103) are configured to shift the movable structure (102) along a first axis, thereby changing a surface curvature of the elastic lens (101),
wherein the movable structure (102) includes a base part (201) and a tilting part (202), wherein the tilting part (202) is coupled to the base part (201) and is tiltable relative to the base part (201) about a second axis (800) and is connected to the elastic lens (101),
the SMA wires (103) further include a plurality of second sets of SMA wires (103) which are configured to tilt the tilting part (202) about the second axis (800) and thereby tilt the elastic lens (101) about the second axis (800), and
wherein the one or more first sets of SMA wires (103) are connected to the base part (201).

## Patentansprüche

1. Optische Vorrichtung (100), umfassend:
eine elastische Linse (101),
eine bewegbare Struktur (102), die mit der elastischen Linse (101) verbunden ist, und Drähte (103) aus Formgedächtnislegierung, SMA, die an die bewegbare Struktur (102) gekoppelt sind,
wobei Längenänderungen (104) der SMA-Drähte (103) eine Bewegung (105) der bewegbaren Struktur (102) bewirken, und
wobei die Bewegung (105) der bewegbaren Struktur (102) eine Verformung (106) der elastischen Linse (101) bewirkt,
wobei die SMA-Drähte (103) einen oder mehrere erste Sätze von SMA-Drähten (103) einschließen, wobei der eine oder die mehreren ersten Sätze von SMA-Drähten (103) ausgestaltet ist/sind, um die bewegbare Struktur (102) entlang einer ersten Achse zu verschieben, wodurch eine Oberflächenkrümmung der elastischen Linse (101) verändert wird,
wobei die bewegbare Struktur (102) ein Basisteil (201) und ein Kippteil (202) einschließt, wobei das Kippteil (202) an das Basisteil (201) gekoppelt ist und relativ zu dem Basisteil (201) um eine zweite Achse (800) kippbar ist und mit der elastischen Linse (101) verbunden ist,
wobei die SMA-Drähte (103) des Weiteren eine Vielzahl von zweiten Sätzen von SMA-Drähten (103) einschließen, die ausgestaltet sind, um das Kippteil (202) um die zweite Achse (800) zu kippen und dadurch die elastische Linse (101) um die zweite Achse (800) zu kippen, und
wobei der eine oder die mehreren ersten Sätze von SMA-Drähten (103) mit dem Basisteil (201) verbunden ist/sind.

2. Optische Vorrichtung (100) nach Anspruch 1, die ausgestaltet ist zum:
Durchführen einer Fokussieroperation und/oder einer Bildstabilisierungsoperation durch Verformen (106) der elastischen Linse (101), wobei das Basisteil (201) für die Fokussieroperation verantwortlich ist und das Kippteil (202) für die Bildstabilisierungsoperation verantwortlich ist.

3. Optische Vorrichtung (100) nach Anspruch 2, wobei:
die Fokussieroperation eine Änderung einer Oberflächenkrümmung der elastischen Linse (101) bewirkt.

4. Optische Vorrichtung (100) nach einem der Ansprüche 1 bis 3, des Weiteren umfassend:
eine Haltestruktur (200), die an der elastischen Linse (101) befestigt ist,
wobei die bewegbare Struktur (102) und die Haltestruktur (200) an entgegengesetzten Seiten der elastischen Linse (101) an der elastischen Linse (101) befestigt sind.

5. Optische Vorrichtung (100) nach einem der Ansprüche 1 bis 4, des Weiteren umfassend:
ein oder mehrere elastische Elemente (700), das/die ausgestaltet ist/sind, um eine Kraft entlang der ersten Achse auf die bewegbare Struktur (102) auszuüben.

6. Optische Vorrichtung (100) nach einem der Ansprüche 1 bis 5, des Weiteren umfassend:
einen oder mehrere Sensoren, der/die ausgestaltet ist/sind, um eine Position der bewegbaren Struktur (102) zu messen.

7. Optische Vorrichtung (100) nach einem der Ansprüche 1 bis 6, wobei das Kippteil (202) umfasst:
ein erstes Element (202a), an dem die zweiten Sätze von SMA-Drähten (103) befestigt sind, und
ein zweites Element (202b), das an das erste Element (202a) gekoppelt ist und relativ zu dem ersten Element (202a) um eine dritte Achse (1000) kippbar ist und mit der elastischen Linse (101) verbunden ist.

8. Optische Vorrichtung (100) nach Anspruch 7, wobei:
die SMA-Drähte (103) eine Vielzahl von dritten Sätzen von SMA-Drähten (103) einschließen, die mit dem zweiten Element (202b) verbunden sind und ausgestaltet sind, um das zweite Element (202b) um die dritte Achse (1000) zu kippen und dadurch die elastische Linse (101) um die dritte Achse (1000) zu kippen.

9. Vorrichtung (100) nach Anspruch 7 oder 8, wobei die bewegbare Struktur (102) des Weiteren einschließt:
ein Lager, das ausgestaltet ist, um das Kippen des zweiten Elements (202b) zu führen.

10. Optische Vorrichtung (100) nach einem der Ansprüche 1 bis 9, des Weiteren umfassend:
einen Linsentubus (203),
wobei die elastische Linse (101) an einem Ende des Linsentubus (203) angeordnet ist, und
wobei die bewegbare Struktur (102) um den Linsentubus (203) herum angeordnet ist.

11. Optisches System (400), umfassend:
einen Bildsensor (300), und
eine optische Vorrichtung (100) gemäß einem der Ansprüche 1 bis 10, die angeordnet ist, um ein Bild auf dem Bildsensor (300) zu generieren,
wobei die optische Vorrichtung (100) ausgestaltet ist, um eine Fokussieroperation und/oder eine Bildstabilisierungsoperation durch Bewegen der bewegbaren Struktur (102) durchzuführen.

12. Verfahren zur Durchführung einer Fokussieroperation und/oder Bildstabilisierungsoperation, wobei das Verfahren umfasst:
Betätigen von SMA-Drähten (103) zur Änderung (104) von deren Längen,
wobei die SMA-Drähte (103) an eine bewegbare Struktur (102) gekoppelt sind, und die bewegbare Struktur (102) mit einer elastischen Linse (101) verbunden ist,
wobei die Längenänderungen (104) der SMA-Drähte (103) eine Bewegung (105) der bewegbaren Struktur (102) bewirken, und
wobei die Bewegung (105) der bewegbaren Struktur (102) die elastische Linse (101) verformt (106),
wobei die SMA-Drähte (103) einen oder mehrere erste Sätze von SMA-Drähten (103) einschließen, wobei der eine oder die mehreren ersten Sätze von SMA-Drähten (103) ausgestaltet ist/sind, um die bewegbare Struktur (102) entlang einer ersten Achse zu verschieben, wodurch eine Oberflächenkrümmung der elastischen Linse (101) verändert wird,
wobei die bewegbare Struktur (102) ein Basisteil (201) und ein Kippteil (202) einschließt, wobei das Kippteil (202) an das Basisteil (201) gekoppelt ist und relativ zu dem Basisteil (201) um eine zweite Achse (800) kippbar ist und mit der elastischen Linse (101) verbunden ist,
wobei die SMA-Drähte (103) des Weiteren eine Vielzahl von zweiten Sätzen von SMA-Drähten (103) einschließen, die ausgestaltet sind, um das Kippteil (202) um die zweite Achse (800) zu kippen und dadurch die elastische Linse (101) um die zweite Achse (800) zu kippen, und
wobei der eine oder die mehreren ersten Sätze von SMA-Drähten (103) mit dem Basisteil (201) verbunden sind.

## Revendications

1. Dispositif optique (100), comprenant :
une lentille élastique (101),
une structure mobile (102) reliée à la lentille élastique (101), et
des fils en alliage à mémoire de forme, SMA (103), couplés à la structure mobile (102), des changements de longueur (104) des fils SMA (103) provoquant un mouvement (105) de la structure mobile (102), et
le mouvement (105) de la structure mobile (102) provoquant une déformation (106) de la lentille élastique (101),
les fils SMA (103) comprenant un ou plusieurs premiers ensembles de fils SMA (103), le ou les premiers ensembles de fils SMA (103) étant configurés pour déplacer la structure mobile (102) le long d'un premier axe, modifiant ainsi une courbure de surface de la lentille élastique (101),
la structure mobile (102) comprenant une partie de base (201) et une partie basculante (202), la partie basculante (202) étant couplée à la partie de base (201) et pouvant être basculée par rapport à la partie de base (201) autour d'un deuxième axe (800) et étant reliée à la lentille élastique (101),
les fils SMA (103) comprenant en outre une pluralité de deuxièmes ensembles de fils SMA (103) qui sont configurés pour faire basculer la partie basculante (202) autour du deuxième axe (800) et ainsi faire basculer la lentille élastique (101) autour du deuxième axe (800), et
le ou les premiers ensembles de fils SMA (103) étant reliés à la partie de base (201).

2. Dispositif optique (100) selon la revendication 1, configuré pour :
effectuer une opération de focalisation et/ou une opération de stabilisation d'image en déformant (106) la lentille élastique (101), la partie de base (201) étant responsable de l'opération de focalisation et la partie de basculement (202) étant responsable de l'opération de stabilisation d'image.

3. Dispositif optique (100) selon la revendication 2,
l'opération de focalisation entraînant une modification de la courbure de la surface de la lentille élastique (101).

4. Dispositif optique (100) selon l'une des revendications 1 à 3, comprenant en outre :
une structure de maintien (200) fixée à la lentille élastique (101),
la structure mobile (102) et la structure de maintien (200) étant fixées à la lentille élastique (101) sur des côtés opposés de la lentille élastique (101).

5. Dispositif optique (100) selon l'une des revendications 1 à 4, comprenant en outre :
un ou plusieurs éléments élastiques (700), configurés pour exercer une force sur la structure mobile (102) le long du premier axe.

6. Dispositif optique (100) selon l'une des revendications 1 à 5, comprenant en outre :
un ou plusieurs capteurs, configurés pour mesurer une position de la structure mobile (102).

7. Dispositif optique (100) selon l'une des revendications 1 à 6, la partie basculante (202) comprenant :
un premier élément (202a), auquel les deuxièmes ensembles de fils SMA (103) sont fixés, et
un deuxième élément (202b), qui est couplé au premier élément (202a) et qui peut basculer par rapport au premier élément (202a) autour d'un troisième axe (1000) et est relié à la lentille élastique (101).

8. Dispositif optique (100) selon la revendication 7,
les fils SMA (103) comprenant une pluralité de troisièmes ensembles de fils SMA (103) reliés au deuxième élément (202b) et configurés pour faire basculer le deuxième élément (202b) autour du troisième axe (1000) et ainsi faire basculer la lentille élastique (101) autour du troisième axe (1000).

9. Dispositif (100) selon la revendication 7 ou 8, la structure mobile (102) comprenant en outre :
un palier configuré pour guider le basculement du deuxième élément (202b).

10. Dispositif optique (100) selon l'une des revendications 1 à 9, comprenant en outre :
un corps de lentille (203),
la lentille élastique (101) étant agencée à une extrémité du corps de lentille (203), et
la structure mobile (102) étant agencée autour du corps de lentille (203).

11. Système optique (400) comprenant
un capteur d'image (300), et
un dispositif optique (100) selon l'une des revendications 1 à 10, agencé pour générer une image sur le capteur d'image (300),
le dispositif optique (100) étant configuré pour effectuer une opération de focalisation et/ou une opération de stabilisation d'image en déplaçant la structure mobile (102).

12. Procédé pour effectuer une opération de focalisation et/ou une opération de stabilisation d'image, le procédé comprenant :
l'actionnement des fils SMA (103) pour modifier (104) leurs longueurs,
les fils SMA (103) étant couplés à une structure mobile (102), et la structure mobile (102) étant reliée à une lentille élastique (101),
les changements de longueur (104) des fils SMA (103) provoquant un mouvement (105) de la structure mobile (102), et
le mouvement (105) de la structure mobile (102) déformant (106) la lentille élastique (101),
les fils SMA (103) comprenant un ou plusieurs premiers ensembles de fils SMA (103), le ou les premiers ensembles de fils SMA (103) étant configurés pour déplacer la structure mobile (102) le long d'un premier axe, modifiant ainsi la courbure de la surface de la lentille élastique (101),
la structure mobile (102) comprenant une partie de base (201) et une partie basculante (202), la partie basculante (202) étant couplée à la partie de base (201) et pouvant être basculée par rapport à la partie de base (201) autour d'un deuxième axe (800) et étant reliée à la lentille élastique (101),
les fils SMA (103) comprenant en outre une pluralité de deuxièmes ensembles de fils SMA (103) qui sont configurés pour faire basculer la partie basculante (202) autour du deuxième axe (800) et ainsi faire basculer la lentille élastique (101) autour du deuxième axe (800), et
le ou les premiers ensembles de fils SMA (103) étant reliés à la partie de base (201).
